# EUROPÄISCHE PATENTSCHRIFT

(11) **EP 0 934 675 B1**
(45) Veröffentlichungstag und Bekanntmachung des Hinweises auf die Patenterteilung: **30.01.2002**
(21) Anmeldenummer: 97913096.0
(22) Anmeldetag: 10.10.1997
(51) Int. Cl.: H04Q 11/04, H04Q 7/24

(54) **VERFAHREN ZUM ÜBERTRAGEN VON NUTZDATEN IN EINEM HYBRIDEN TELEKOMMUNIKATIONSSYSTEM, INSBESONDERE EINEM "ISDN -- DECT-SPEZIFISCHEN RLL/WLL"-SYSTEM**
METHOD FOR THE TRANSMISSION OF USER DATA IN A HYBRID TELECOMMUNICATION SYSTEM ESPECIALLY AN "ISDN -- DECT SPECIFIC RLL/WLL" SYSTEM
PROCEDE POUR TRANSMETTRE DES DONNEES UTILISATEUR DANS UN SYSTEME DE TELECOMMUNICATIONS HYBRIDE, NOTAMMENT UN SYSTEME "RLL/WLL SPECIFIQUE ISDN -- DECT"

(30) Priorität: 23.10.1996 DE 19643776
(43) Veröffentlichungstag der Anmeldung: 11.08.1999
(73) Patentinhaber: SIEMENS AKTIENGESELLSCHAFT, 80333 München (DE)
(72) Erfinder: KRUK, Anton, D-40699 Erkrath (DE)
(86) Internationale Anmeldenummer: DE9702324
(87) Internationale Veröffentlichungsnummer: WO9818285

(56) Entgegenhaltungen:
- WO-A-93/21719
- DE-A- 19 625 142
- US-A- 5 463 628
- WAH HING I P ET AL: "CORDLESS ACCESS TO THE ISDN BASIC RATE SERVICE" TENTH UK TELETRAFFIC SYMPOSIUM, 1.Januar 1993, MARTLESHAM HEATH, UK, Seiten 29/1-7, XP002052027
- FALCONER D D ET AL: "TIME DIVISION MULTIPLE ACCESS METHODS FOR WIRELESS PERSONAL COMMUNICATIONS" IEEE COMMUNICATIONS MAGAZINE, Bd. 33, Nr. 1, 1.Januar 1995, Seiten 50-57, XP000495891 in der Anmeldung erwähnt
- DOI N ET AL: "DS/CDMA PROTOTYPE SYSTEM TRANSMITTING LOW BIT-RATE VOICE AND HIGH BIT-RATE ISDN SIGNALS" PROCEEDINGS OF THE IEEE VEHICULAR TECHNOLOGY CONFERENCE (VTC), Bd. 1, 8. - 10.Juni 1994, STOCKHOLM, Seiten 51-55, XP000496632

## Beschreibung

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrekke drahtgebunden ist oder auf der Basis von diversen Nachrichtenübertragungsverfahren FDMA (**F**requency **D**ivision **M**ultiple **A**ccess), **T**DMA (**T**ime **D**ivision **M**ultiple **A**ccess) und/oder CDMA (**C**ode **D**ivision **M**ultiple **A**ccess) - z.B. nach Funkstandards wie DECT, GSM, WACS oder PACS, IS-54, PHS, PDC etc. [vgl. IEEE Communications Magazine, January 1995, Seiten 50 bis 57; D.D. Falconer et al:"Time Division Multiple Access Methods for Wireless Personal Communications"] drahtlos erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z. B. eine einen Gegenstand betreffende Nachricht
(1) in Form eines Bildes,
(2) als gesprochenes Wort,
(3) als geschriebenes Wort,
(4) als verschlüsseltes Wort oder Bild
   übertragen werden. Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z. B. Impulse, digitale Signale) entstehen.

Ausgehend von dieser allgemeinen Definition eines Nachrichtensystems bezieht sich die Erfindung auf ein Verfahren und Telekommunikationsschnittstelle zum Übertragen kontinuierlicher und/oder diskontinuierlicher Datenströme in einem hybriden Telekommunikationssystem, insbesondere einem "ISDN ↔ DECT-spezifischen RLL/WLL"-System gemäß dem Oberbegriff des Patentanspruches 1.

Hybride Telekommunikationssysteme sind z.B. unterschiedliche - drahtlose und/oder drahtgebundene - Telekommunikationsteilsysteme enthaltende Nachrichtensysteme.

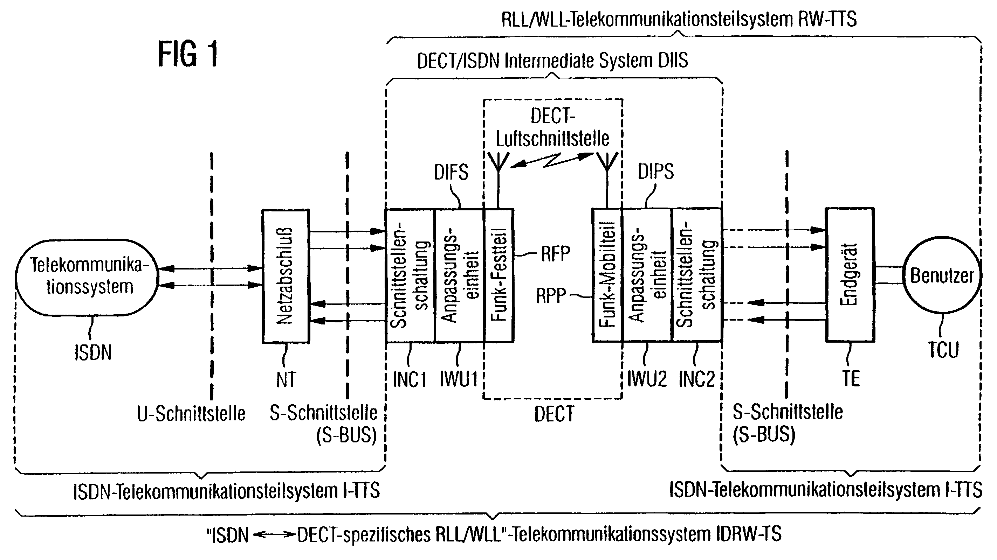

FIGUR 1 zeigt -stellvertretend für die Vielzahl der hybriden Telekommunikationssysteme - ausgehend von den Druckschriften *"Nachrichtentechnik Elektronik, Berlin 45 (1995) Heft 1, Seiten 21 bis 23 und Heft 3 Seiten 29 und 30" sowie IEE Colloquium 1993, 173; (1993), Seiten 29/1 - 29/7; W.Hing, F.Halsall:"Cordless access to the ISDN basic rate Service"* auf der Basis eines **D**ECT/**I**SDN **I**ntermediate **S**ystems DIIS gemäß der *ETSI-Publikation prETS 300xxx, Version 1.10, September 1996* ein **"I**SDN ↔ **D**ECT-spezifisches **R**LL/**W**LL"-**T**elekommunikationssystem IDRW-TS (**I**ntegrated **S**ervices **D**igital **N**etwork ↔ **R**adio in the **L**ocal **L**oop/**W**ireless in the **L**ocal **L**oop) mit einem **I**SDN-**T**elekommunikations**t**eil**s**ystem I-TTS [*vgl. Druckschrift "Nachrichtentechnik Elektronik, Berlin 41-43,* ***T****eil: 1 bis 10,* ***T****1: (1991) Heft 3, Seiten 99 bis 102;* ***T****2: (1991) Heft 4, Seiten 138 bis 143;* ***T****3: (1991) Heft 5, Seiten 179 bis 182 und Heft 6, Seiten 219 bis 220;* ***T****4: (1991) Heft 6, Seiten 220 bis 222 und (1992) Heft 1, Seiten 19 bis 20;* ***T****5: (1992) Heft 2, Seiten 59 bis 62 und (1992) Heft 3, Seiten 99 bis 102; **T**6: (1992) Heft 4, Seiten 150 bis 153;* ***T****7: (1992) Heft 6, Seiten* *238 bis 241;* ***T****8: (1993) Heft 1, Seiten 29 bis 33;* ***T****9: (1993) Heft 2, Seiten 95 bis 97 und (1993) Heft 3, Seiten 129 bis 135;* ***T****10: (1993) Heft 4, Seiten 187 bis 190;"*] und einem DECT-spezifischen **R**LL/**W**LL-**T**elekommunikations**t**eil**s**ystem RW-TTS.

Das DECT/ISDN Intermediate System DIIS bzw. das RLL/WLL-Telekommunikationsteilsystem RW-TTS basiert dabei vorzugsweise auf ein **D**ECT/**G**AP-**S**ystem DGS [**D**igital **E**nhanced (früher: **E**uropean) **C**ordless **T**elecommunication; vgl. **(1):** Nachrichtentechnik Elektronik 42 (1992) Jan./Feb. Nr. 1, Berlin, DE; U. Pilger "Struktur des DECT-Standards", Seiten 23 bis 29 **in Verbindung mit** der ETSI-Publikation ETS 300175-1...9, Okt. 1992; **(2):** Telcom Report 16 (1993), Nr. 1, J. H. Koch: "Digitaler Komfort für schnurlose Telekommunikation - DECT-Standard eröffnet neue Nutzungsgebiete", Seiten 26 und 27; **(3):** tec 2/93 - Das technische Magazin von Ascom "Wege zur universellen mobilen Telekommunikation", Seiten 35 bis 42; **(4):** Philips Telecommunication Review Vol. 49, No. 3, Sept. 1991, R.J. Mulder:" DECT, a universal cordless access system"; **(5):** WO 93/21719 (FIG 1 bis 3 mit dazugehöriger Beschreibung)]. Der GAP-Standard (**G**eneric **A**ccess **P**rofile) ist eine Untermenge des DECT-Standards, dem die Aufgabe zukommt, die Interoperabilität der DECT-Luftschnittstelle für Telefonanwendungen sicherzustellen *(vgl. ETSI-Publikation prETS 300444, April 1995).*

Das DECT/ISDN Intermediate System DIIS bzw. das RLL/WLL-Telekommunikationsteilsystem RW-TTS kann alternativ auch auf einem GSM-System basieren (**G**roupe **S**péciale **M**obile oder **G**lobal **S**ystem for **M**obile Communication; vgl. Informatik Spektrum 14 (1991) Juni, Nr. 3, Berlin, DE; A.Mann:"Der GSM-Standard-Grundlage für digitale europäische Mobilfunknetze", Seiten 137 bis 152). Stattdessen ist es im Rahmen eines hybriden Telekommunikationssystems auch möglich, daß das ISDN-Telekommunikationsteilsystem I-TTS als GSM-System ausgebildet ist. Darüber hinaus kommen als weitere Möglichkeiten für die Realisierung des DECT/ISDN Intermediate System DIIS bzw. des RLL/WLL-Telekommunikationsteilsystems RW-TTS oder des ISDN-Telekommunikationsteilsystems I-TTS die eingangs erwähnten Systeme sowie zukünftige Systeme in Frage, die auf die bekannten Vielfachzugriffsmethoden FDMA, TDMA, CDMA (**F**requency **D**ivision **M**ultiple **A**ccess, **T**ime **D**ivision **M**ultiple **A**ccess, **C**ode **D**ivision **M**ultiple **A**ccess) und hieraus gebildete hybride Vielfachzugriffsmethoden basieren.

Die Verwendung von Funkkanälen (z.B. DECT-Kanälen) in klassischen leitungsgebundenen Telekommunikationssystemen, wie dem ISDN, gewinnt zunehmend an Bedeutung, insbesondere vor dem Hintergrund zukünftiger alternativer Netzbetreiber ohne eigenes komplettes Drahtnetz.

So sollen z.B. bei dem RLL/WLL-Telekommunikationsteilsystems RW-TTS die drahtlose Anschlußtechnik RLL/WLL (**R**adio in the **L**ocal **L**oop/**W**ireless in the **L**ocal **L**oop) z.B. unter der Einbindung des DECT-System DS dem ISDN-Teilnehmer ISDN-Dienste an Standard-ISDN-Schnittstellen verfügbar gemacht werden (vgl. FIGUR 1).

In dem "ISDN ↔ DECT-spezifisches RLL/WLL"-Telekommunikationssystem IDRW-TS nach FIGUR 1 ist ein Telekommunikationsteilnehmer (Benutzer) TCU (Tele-Communication **U**ser) mit seinem Endgerat TE (**T**erminal **E**ndpoint; **T**erminal **E**quipment) z.B. über eine standardisierte S-Schnittstelle (S-BUS), das als lokale Nachrichtenübertragungsschleife ausgebildete - vorzugsweise DECT-spezifische und in dem RLL/WLL-Telekommunikationsteilsystems RW-TTS enthaltene- DECT/ISDN Intermediate System DIIS (erstes Telekommunikationsteilsystem), eine weitere standardisierte S-Schnittstelle (S-BUS), einen Netzabschluß NT (**N**etwork **T**ermination) und eine standardisierte U-Schnittstelle des ISDN-Telekommunikationsteilsystems I-TTS (zweites Telekommunikationsteilsystem) in die ISDN-Welt mit den darin verfügbaren Diensten eingebunden.

Das erste Telekommunikationsteilsystem DIIS besteht im wesentlichen aus zwei Telekommunikationsschnittstellen, einer ersten Telekommunikationsschnittstelle DIFS (**D**ECT **I**ntermediate **F**ixed **S**ystem) und einer zweiten Telekommunikationsschnittstelle DIPS (**D**ECT **I**ntermediate **P**ortable **S**ystem), die drahtlos, z.B. über eine DECT-Luftschnittstelle, miteinander verbunden sind. Wegen der quasi-ortsgebundenen ersten Telekommunikationsschnittstelle DIFS bildet das erste Telekommunikationsteilsystem DIIS die vorstehend in diesem Zusammenhang definierte lokale Nachrichtenübertragungsschleife. Die erste Telekommunikationsschnittstelle DIFS enthält ein Funk-Festteil RFP (**R**adio **F**ixed **P**art), eine Anpassungseinheit IWU1 (**I**nter**W**orking **U**nit) und eine Schnittstellenschaltung INC1 (**IN**terface **C**ircuitry) zur S-Schnittstelle. Die zweite Telekommunikationsschnittstelle DIPS enthält ein Funk-Mobilteil RPP (**R**adio **P**ortable **P**art) und eine Anpassungseinheit IWU2 (**I**nter**W**orking **U**nit) und eine Schnittstellenschaltung INC2 (**IN**terface **C**ircuitry) zur S-Schnittstelle. Das Funk-Festteil RFP und das Funk-Mobilteil RPP bilden dabei das bekannte DECT/GAP-System DGS.

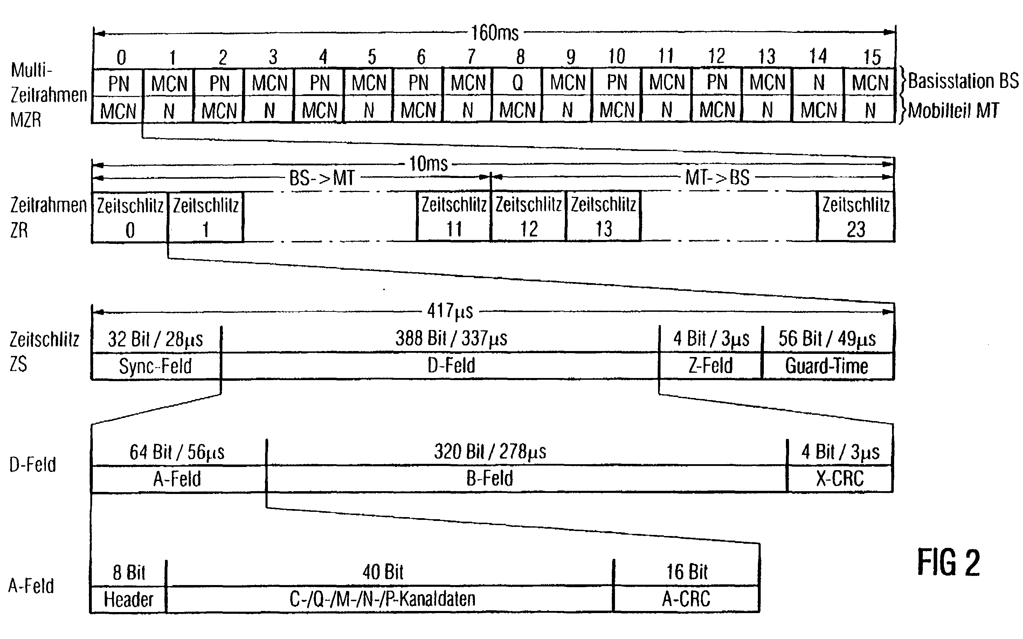

FIGUR 2 zeigt in Anlehnung an die Druckschrift *"Nachrichtentechnik Elektronik 42 (1992) Jan./Feb., Nr. 1, Berlin, DE; U. Pilger: "Struktur des DECT-Standards", Seiten 23 bis 29 in Verbindung mit ETS 300 175-1...9, Oktober 1992"* die TDMA-Struktur eines DECT/GAP-Systems. Das DECT/GAP-System ist ein bezüglich der Vielfachzugriffsverfahren hybrides System, bei dem nach dem FDMA-Prinzip auf zehn Frequenzen im Frequenzband zwischen 1,88 und 1,90 GHz Funknachrichten nach dem TDMA-Prinzip gemäß FIGUR 2 in einer vorgegebenen zeitlichen Abfolge von der Basisstation RFP zum Mobilteil RPP und vom Mobilteil RPP zur Basisstation RFP (Duplex-Betrieb) gesendet werden können. Die zeitliche Abfolge wird dabei von einem Multi-Zeitrahmen MZR bestimmt, der alle 160 ms auftritt und der 16 Zeitrahmen ZR mit jeweils einer Zeitdauer von 10 ms aufweist. In diesen Zeitrahmen ZR werden nach Basisstation RFP und Mobilteil RPP getrennt Informationen übertragen, die einen im DECT-Standard definierten C-,M-,N-,P-,Q-Kanal betreffen. Werden in einem Zeitrahmen ZR Informationen für mehrere dieser Kanäle übertragen, so erfolgt die Übertragung nach einer Prioritätenliste mit M > C > N und P > N. Jeder der 16 Zeitrahmen ZR des Multi-Zeitrahmens MZR unterteilt sich wiederum in 24 Zeitschlitze ZS mit jeweils einer Zeitdauer von 417 µs, von denen 12 Zeitschlitze ZS (Zeitschlitze 0 ... 11) für die Übertragungsrichtung "Basisstation RFP → Mobilteil RPP" und weitere 12 Zeitschlitze ZS (Zeitschlitze 12 ... 23) für die Übertragungsrichtung "Mobilteil RPP → Basisstation RFP" bestimmt sind. In jedem dieser Zeitschlitze ZS werden nach dem DECT-Standard Informationen mit einer Bitlänge von 480 Bit übertragen. Von diesen 480 Bit werden 32 Bit als Synchronisationsinformation in einem SYNC-Feld und 388 Bit als Nutzinformation in einem D-Feld übertragen. Die restlichen 60 Bit werden als Zusatzinformationen in einem Z-Feld und als Schutzinformationen in einem Feld "Guard-Time" übertragen. Die als Nutzinformationen übertragenen 388 Bit des D-Feldes unterteilen sich wiederum in ein 64 Bit langes A-Feld, ein 320 Bit langes B-Feld und ein 4 Bit langes "X-CRC"-Wort. Das 64 Bit lange A-Feld setzt sich aus einem 8 Bit langen Datenkopf (Header), einem 40 Bit langen Datensatz mit Daten für die C-,Q-,M-,N-,P-Kanäle und einem 16 Bit langen "A-CRC"-Wort zusammen. Die in FIGUR 2 dargestellte DECT-Übertragungsstruktur wird als "Full-Slot-Format" bezeichnet. Zusätzlich ist im DECT-Standard noch ein "Double-Slot-Format" definiert (vgl. WO93/21719).

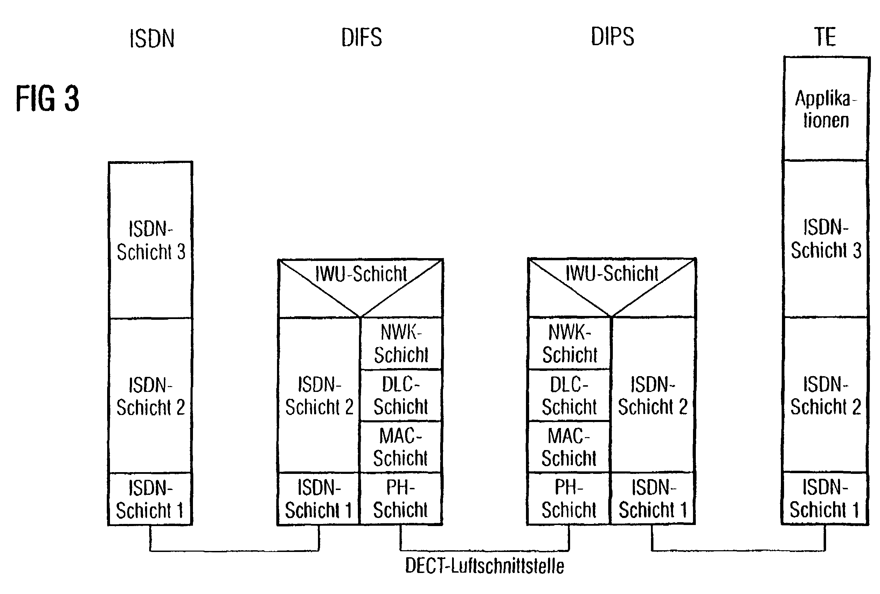

Figur 3 zeigt auf der Basis des OSI/ISO-Schichtenmodells [*vgl.* ***(1):*** *Unterrichtsblätter - Deutsche Telekom Jg. 48, 2/1995, Seiten 102 bis 111;* ***(2):*** *ETSI-Publikation ETS 300175-1..9, Oktober 1992;* ***(3):*** *ETSI-Publikation ETS 300102, Februar 1992;* ***(4):*** *ETSI-Publikation ETS 300125, September 1991;* ***(5):*** *ETSI-Publikation ETS 300012, April 1992*] ein Modell der C-Ebene des "ISDN ↔ DECT-spezifischen RLL/WLL"-Telekommunikationssystems IDRW-TS nach FIGUR 1 *(vgl. ETSI-Publikation prETS 300xxx, Version 1.10, September 1996, Kap. 5, Figur 3).*

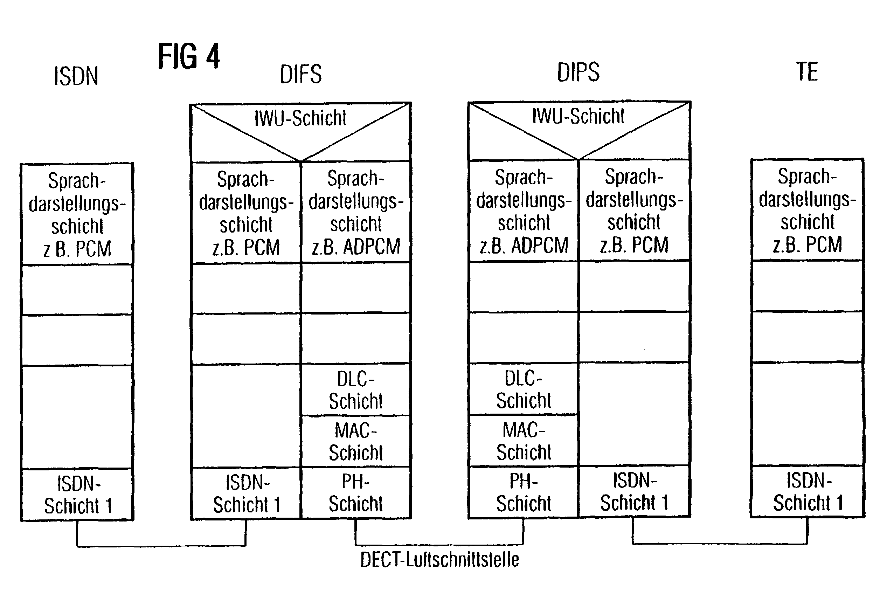

Figur 4 zeigt auf der Basis des OSI/ISO-Schichtenmodells [*vgl.* ***(1):*** *Unterrichtsblätter - Deutsche Telekom Jg. 48, 2/1995, Seiten 102 bis 111;* ***(2):*** *ETSI-Publikation ETS 300175-1..9, Oktober 1992;* ***(3):*** *ETSI-Publikation ETS 300102, Februar 1992;* ***(4):*** *ETSI-Publikation ETS 300125, September 1991;* ***(5):*** *ETSI-Publikation ETS 300012, April 1992*] ein Modell der U-Ebene für Sprachdatenübertragung des "ISDN ↔ DECT-spezifischen RLL/WLL"-Telekommunikationssystems IDRW-TS nach FIGUR 1 *(vgl. ETSI-Publikation prETS 300xxx, Version 1.10, September 1996, Kap. 5, Figur 4).*

Bei dem DECT/ISDN Intermediate System (DECT/ISDN-Protokoll-Profil) gemäß FIGUR 1 ist es möglich, z. B. einen Sₒ-Anschluß einem ISDN-Teilnehmer drahtlos über eine DECT-Luftschnittstelle zur Verfügung zu stellen. Hierbei wird abhängig von dem ISDN-spezifischen Service (Sprache, Daten, etc.) jeweils ein DECT-Funkkanal für den ISDN-D-Kanal (Datenübertragungsrate von 16kb/s) und die beiden ISDN-B-Kanäle (Datenübertragungsrate von 64kb/s) aufgebaut. Für den ISDN-D-Kanal wird zunächst ein DECT-Traffic-Bearer im "Full-Slot-Format" d.h. 320 Bit Nutzdaten pro 10 ms bzw. pro TDMA-Rahmen; Datenübertragungsrate von 32kb/s) aufgebaut. Werden für die ISDN-Verbindung ISDN-B-Kanäle benötigt, so wird pro B-Kanal je nachdem, ob beispielsweise Sprachdaten oder Videodaten übertragen werden sollen, ein DECT-Traffic-Bearer im "Full-Slot-Format" d.h. 320 Bit Nutzdaten pro 10 ms bzw. pro TDMA-Rahmen; Datenübertragungsrate von 32kb/s) oder ein DECT-Traffic-Bearer im "Double-Slot-Format" (800 Bit Nutzdaten pro 10 ms bzw. pro TDMA-Rahmen; Datenübertragungsrate von 80kb/s) aufgebaut. Das "Full-Slot-Format" des ISDN-D-Kanals wird jedoch nur für die Zeit benötigt, in der sehr viele ISDN-Signalisierungsdaten übertragen werden müssen. Dies geschieht typischerweise am Anfang einer Verbindung. Aus dieser ISDN-D-Kanal-Signalisierung wird erschichtlich, ob die ISDN-Verbindung ISDN-B-Kanäle benötigt und wie viele. Es werden dementsprechend ein oder zwei DECT-Traffic-Bearer im "Double-Slot-Format" aufgebaut bzw. ein oder zwei "Double Slot" belegt. Nimmt nun die Datenrate auf dem ISDN-D-Kanal ab, so wird der DECT-Traffic-Bearer im "Full-Slot-Format" abgebaut, und die Signalisierung wird im A-Feld eines der beiden DECT-Traffic-Bearer im "Double-Slot-Format" fortgesetzt. Dies ist leider nicht von Anfang an möglich, da die Datenrate des ISDN-D-Kanals höher ist als die im A-Feld eines DECT-Traffic-Bearers. Deshalb wird, falls erkannt wird, daß die Datenrate im ISDN-D-Kanal wieder steigt, auch der DECT-Traffic-Bearer im "Full-Slot-Format" für den ISDN-D-Kanal bei Bedarf wieder aufgebaut. Mit diesem Mechanismus soll die Belastung des DECT-Spektrums durch den ISDN-D-Kanal minimiert werden *(vgl. deutsche Patentanmeldung 19625142.7)*. Ist jedoch erst einmal eine solche ISDN-Verbindung über die DECT-Luftschnittstelle aufgebaut, so belegt jeder der ISDN-B-Kanäle einen "DECT-Double-Slot" (entsprechend 2 von 120 DECT-Kanälen) und zwar so lange, bis die Verbindung wieder abgebaut wird.

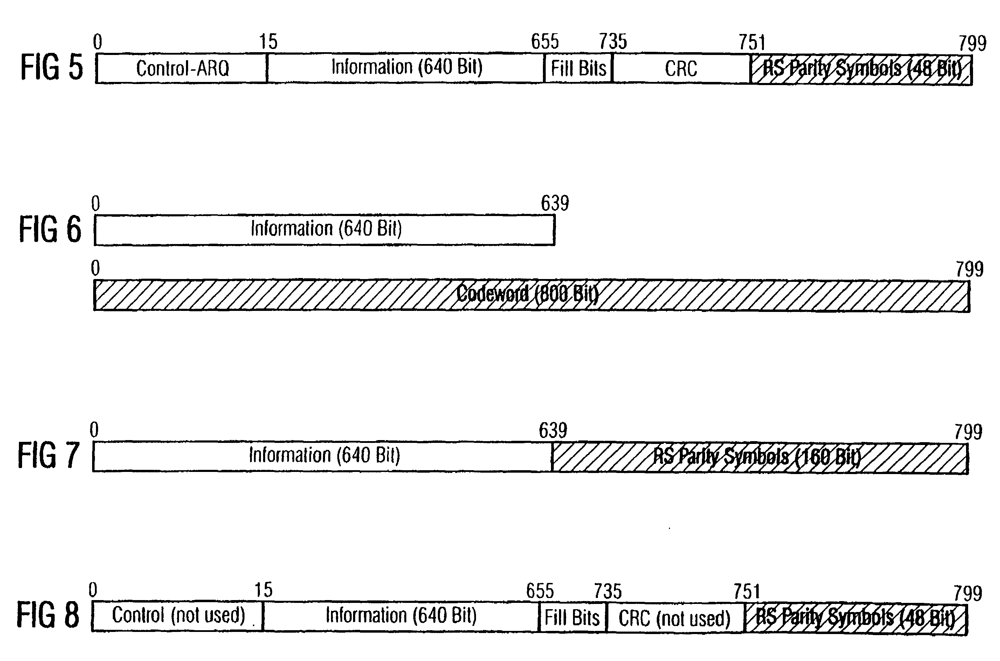

Für die Übertragung der ISDN-B-Kanaldaten mit einer Datenübertragungsrate von 64kb/s ist für DECT/ISDN Intermediate Systems gemäß der *ETSI-Publikation prETS 300xxx, Version 1.10, September 1996, Kap. 12.3 und 12.4, Annex A.2.1.1 und Annex B.2* und für DECT/ISDN End Systems gemäß der *ETSI-Publikation prETS 300434-1, Januar 1996, Annex B* der LU7-Datenservice vorgesehen, der eine Kombination aus einem **"A**utomatic **R**epeat **R**equest"-Verfahren (ARQ), einem **"F**orward **E**rror **C**orrection"-Verfahren (FEC) mit einem gemäß FIGUR 5 systematisch gekürzten Reed-Solomon-Code und einer Kürzungsrate von (100,94) - d.h. von 100 Symbolen sind 94 Info-Symbole und 6 Symbole Redundanz - und einem **"C**yclic **R**edundancy **C**heck"-Verfahren (CRC) verwendet. Dieses Konzept bedingt zu bereits systembedingten Verzögerungen eine zusätzliche Verzögerung um 80 ms.

Bei zu übertragenden ISDN-Diensten, bei denen diese zusätzliche Verzögerung nicht erlaubt ist, ist eine transparente Übertragung erforderlich, die keinen Fehlerschutz bzw. Fehlerkorrektur vorsieht. Dies ist für DECT/ISDN Intermediate Systems gemäß der *ETSI-Publikation prETS 300xxx, Version 1.10, September 1996, Kap. 12.3 und 12.4, Annex A.2.1.1 und Annex B.2* der LU1-Datenservice. Die Folge hiervon ist eine wegen der zur Verfügung stehenden aber ungenutzten Redundanz von 160 Bit (Datenübertragungsrate von 16kb/s) unnötig hohe Restfehlerrate.

Die der Erfindung zugrundeliegende Aufgabe besteht darin, in einem hybriden Telekommunikationssystem, insbesondere einem "ISDN ↔ DECT-spezifischen RLL/WLL"-System, das Übertragen von Nutzdaten zu verbessern.

Diese Aufgabe wird ausgehend von dem in dem Oberbegriff des Patentanspruches 1 definierten Verfahren durch die in dem Kennzeichen des Patentanspruches 1 angegebenen Merkmale gelöst.

Die der Erfindung zugrundeliegende Idee besteht darin, in einem hybriden Telekommunikationssystem, insbesondere einem "ISDN ↔ DECT-spezifischen RLL/WLL"-System die Nutzdaten nach einem Nutzdatenübertragungsprotokoll zu übertragen, bei dem eine sich aus der Differenz einer ersten Nutzdatenübertragungskapazität eines ISDN-Systems (640 Bit des ISDN-B-Kanals) und einer dritten Nutzdatenübertragungskapazität eines DECT/ISDN Intermediate Systems (800 Bit des DECT-Double-Slot-Formates) ergebende Datenübertragungsredundanz zumindest teilweise dazu benutzt wird, um bei einer vollständig nutzdatengesicherten Nutzdatenübertragung zusätzlich zu systembedingten Übertragungsverzögerungen auftretende Übertragungsverzögerungen auf Kosten einer fehlerfreien Nutzdatenübertragung zu vermeiden.

Nach Anspruch 2 ist es von Vorteil, wenn die Datenübertragungsredundanz nur zum Teil ausgenutzt wird. Dadurch kann der für die Datenübertragung normalerweise (wenn die zusätzliche Übertragungszeitdauer von 80 ms in Kauf genommen werden kann bzw. akzeptiert wird) verwendete LU7-Datenservice mit geringen Modifikationen (z. B. Weglassen der ARQ- und CRC-Daten gemäß FIGUR 8) auch für die der Erfindung zugrundeliegende Datenübertragung, bei der die zusätzliche Verzögerung inakzeptabel ist, verwendet werden (Stw.: Kompatibilität). Durch die Kompatibilität ist wiederum der Realisierungsaufwand im hybriden Telekomunikationssystem kleiner.

Weitere vorteilhafte Weiterbildungen der Erfindung sind in den übrigen Unteransprüchen angegeben.

Ein Ausführungsbeispiel der Erfindung wird anhand der FIGUREN 6 bis 8 erläutert.

Die FIGUREN 6 bis 8 zeigen jeweils, wie die zur Verfügung stehende Redundanz mit fehlerkorrigierenden Codes ausgenutzt wird, um die bei der Verwendung des LU1-Datenservice resultierende Fehlerrate zu senken. Neben den Verfahren die die gesamte Redundanz von 160 Bit (Datenübertragungsrate von 16kb/s) nutzen (schraffierte Flächen in den FIGUREN 6 und 7), zeigt FIGUR 8 ein Verfahren bei dem nur ein Teil der Redundanz ausgenutzt wird (schraffierte Fläche), während ein Teil ungenutzt bleibt (gepunktete Fläche). Im einzelnen zeigen:

FIGUR 6 die Verwendung eines Faltungscodes der Rate 4/5.

FIGUR 7 die Verwendung eines systematisch gekürzten Reed-Solomon-Code mit einer Kürzungsrate von (100,80) - d.h. von 100 Symbolen sind 80 Info-Symbole und 20 Symbole Redundanz.

FIGUR 8 ausgehend von FIGUR 5 die Verwendung eines systematisch gekürzten Reed-Solomon-Code mit einer Kürzungsrate von (100,94) - d.h. von 100 Symbolen sind 94 Info-Symbole und 6 Symbole Redundanz, wobei gegenüber der dort beschriebenen LU7-Rahmenstruktur die Steuerdaten für das ARQ-verfahren und die Daten für das CRC-Verfahren nicht genutzt werden. Der Vorteil des Verfahrens nach FIGUR 8 gegenüber den Verfahren nach den FIGUREN 6 und 7 besteht darin, daß die Aufteilung der 800 Bits nach FIGUR 8 bezüglich der Bit-Struktur (nicht des mit den Bit zu übertragenden Inhaltes!) der Bitaufteilung im LU7-Datenservice am nächsten kommt und daher die Datenübertragung in den DECT/ISDN Intermediate Systems und DECT/ISDN End Systems insgesamt vereinfacht wird.

## Patentansprüche

1. Verfahren zum Übertragen von Nutzdaten in einem hybriden Telekommunikationssystem, insbesondere einem "ISDN ↔ DECT-spezifischen RLL/WLL"-System,
a) wobei das hybride Telekommunikationssystem zur Nutzdatenübertragung
a1) ein erstes Telekommunikationsteilsystem (I-TTS) mit mindestens einem ersten Telekommunikationskanal mit jeweils einer ersten Nutzdatenübertragungskapazität und
a2) ein zweites Telekommunikationsteilsystem (DIIS, RW-TTS) mit einer vorgegebenen Anzahl von zweiten Telekommunikationskanälen mit jeweils einer zweiten Nutzdatenübertragungskapazität enthält,
b) wobei das zweite Telekommunikationsteilsystem (DIIS, RW-TTS) zur Übertragung der Daten eine erste Telekommunikationsschnittstelle (DIFS) und eine zweite Telekommunikationsschnittstelle (DIPS) aufweist, die über den zweiten Telekommunikationskanal bzw. die zweiten Telekommunikationskanäle miteinander verbunden sind,
c) wobei das zweite Telekommunikationsteilsystem (DIIS, RW-TTS) als lokale Nachrichtenübertragungsschleife über die beiden Telekommunikationsschnittstellen (DIFS, DIPS) in das erste Telekommunikationsteilsystem (I-TTS) eingebunden ist,
d) wobei die erste Nutzdatenübertragungskapazität kleiner als eine sich aus der vorgegebenen Anzahl der zweiten Telekommunikationskanäle mit jeweils der zweiten Nutzdatenübertragungskapazität ergebende dritte Nutzdatenübertragungskapazität ist,
**dadurch gekennzeichnet, daß**
die Nutzdaten nach einem Nutzdatenübertragungsprotokoll übertragen werden, bei dem eine sich aus der Differenz der ersten Nutzdatenübertragungskapazität und der dritten Nutzdatenübertragungskapazität ergebende Datenübertragungsredundanz zumindest teilweise dazu benutzt wird, um bei einer vollständig nutzdatengesicherten Nutzdatenübertragung zusätzlich zu systembedingten Übertragungsverzögerungen auftretende Übertragungsverzögerungen auf Kosten einer fehlerfreien Nutzdatenübertragung zu vermeiden.

2. Verfahren nach Anspruch 1, **dadurch gekennzeichnet, daß**
die Datenübertragungsredundanz zum Teil benutzt wird.

3. Verfahren nach Anspruch 1 oder 2, **dadurch gekennzeichnet, daß**
das erste Telekommunikationsteilsystem (I-TTS) ein ISDN-System und der erste Telekommunikationskanal bzw. die ersten Telekommunkationskanäle ein ISDN-B-Kanal bzw. ISDN-B-Kanäle sind und daß die erste Nutzdatenübertragungskapazität der Kapazität eines "ISDN-B"-Kanals entspricht.

4. Verfahren nach einem der Ansprüche 1 bis 3, **dadurch gekennzeichnet, daß**
das zweite Telekommunikationsteilsystem (DIIS, RW-TTS) auf einem DECT-System basiert und die vorgegebene Anzahl von zweiten Telekommunikationskanälen DECT-Kanäle sind und daß die zweite Nutzdatenübertragungskapazität der Kapazität eines "DECT-Full-Slot"-Kanals und die zweite Nutzdatenübertragungskapazität der Kapazität eines "DECT-Double-Slot"-Kanals entsprechen.

5. Verfahren nach einem der Ansprüche 1 bis 3, **dadurch gekennzeichnet, daß**
das zweite Telekommunikationsteilsystem (DIIS, RW-TTS) auf einem GSM-System basiert und die vorgegebene Anzahl von zweiten Telekommunikationskanälen GSM-Kanäle sind.

6. Verfahren nach einem der Ansprüche 1 bis 3, **dadurch gekennzeichnet, daß**
das zweite Telekommunikationsteilsystem (DIIS, RW-TTS) auf einem PHS-System, einem WACS-System oder einem PACS-System basiert und die vorgegebene Anzahl von zweiten Telekommunikationskanälen PHS-, WACS- bzw. PACS-Kanäle sind.

7. Verfahren nach einem der Ansprüche 1 bis 3, **dadurch gekennzeichnet, daß**
das zweite Telekommunikationsteilsystem (DIIS, RW-TTS) auf einem "IS-54"-System oder einem PDC-System basiert und die vorgegebene Anzahl von zweiten Telekommunikationskanälen "IS-54"-bzw. PDC-Kanäle sind.

8. Verfahren nach einem der Ansprüche 1 bis 3, **dadurch gekennzeichnet, daß**
das zweite Telekommunikationsteilsystem (DIIS, RW-TTS) auf einem CDMA-System, einem TDMA-System, einem FDMA-System oder einem-bezüglich dieser gennannten Übertragungsstandards - hybriden System basiert und die vorgegebene Anzahl von zweiten Telekommunikationskanälen CDMA-, TDMA-, FDMA-Kanäle bzw. bezüglich dieser genannten Übertragungsstandards hybride Kanäle sind.

9. Verfahren nach Anspruch 4, **dadurch gekennzeichnet, daß**
die erste Telekommunikationsschnittstelle (DIFS) ein **D**ECT **I**NTERMEDIATE **F**IXED **S**YSTEM (DIFS) und die zweite Telekommunikationsschnittstelle (DIPS) ein **D**ECT **I**NTERMEDIATE **P**ORTABLE **S**YSTEM (DIPS) ist.

10. Verfahren nach einem der Ansprüche 1 bis 9, **dadurch gekennzeichnet, daß**
das Nutzdatenübertragungsprotokoll der um den Reed-Solomon-Code erweiterte LU1-Datenservice ist.

11. Verfahren nach Anspruch 10, **dadurch gekennzeichnet, daß**
der Reed-Solomon-Code der systematisch gekürzte Reed-Solomon-Code des LU7-Datenservice ist.

12. Verfahren nach einem der Ansprüche 1 bis 9, **dadurch gekennzeichnet, daß**
das Nutzdatenübertragungsprotokoll der um den Faltungscode mit der Faltungsrate "4/5" erweiterte LU1-Datenservice ist.

## Claims

1. Method for transmitting useful data in a hybrid telecommunications system, in particular an "ISDN ↔ DECT-specific RLL/WLL" system,
a) the hybrid telecommunications system containing, for the transmission of useful data,
a1) a first telecommunications subsystem (I-TTS) having at least a first telecommunications channel with in each case a first useful data transmission capacity and
a2) a second telecommunications subsystem (DIIS, RW-TTS) having a prescribed number of second telecommunications channels with in each case a second useful data transmission capacity,
b) the second telecommunications subsystem (DIIS, RW-TTS) having, for transmitting the data, a first telecommunications interface (DIFS) and a second telecommunications interface (DIPS) which are connected to one another via the second telecommunications channel or channels,
c) the second telecommunications subsystem (DIIS, RW-TTS) being integrated, as a local telecommunications transmission loop, into the first telecommunications subsystem (I-TTS) via the two telecommunications interfaces (DIFS, DIPS),
d) the first useful data transmission capacity being lower than a third useful data transmission capacity resulting from the prescribed number of second telecommunications channels with in each case the second useful data transmission capacity,
**characterized in that** the useful data are transmitted according to a useful data transmission protocol in which a data transmission redundancy, resulting from the difference between the first useful data transmission capacity and the third useful data transmission capacity, is used at least partially, in the case of a completely useful-data-protected useful data transmission, to avoid transmission delays occurring in addition to transmission delays due to the system, at the expense of an error-free useful data transmission.

2. Method according to Claim 1, **characterized in that** the data transmission redundancy is partially used.

3. Method according to Claim 1 or 2, **characterized in that** the first telecommunications subsystem (I-TTS) is an ISDN system and the first telecommunications channel or channels are an ISDN B channel or ISDN B channels, and **in that** the first useful data transmission capacity corresponds to the capacity of an "ISDN B" channel.

4. Method according to one of Claims 1 to 3, **characterized in that** the second telecommunications subsystem (DIIS, RW-TTS) is based on a DECT system and the prescribed number of second telecommunications channels are DECT channels, and **in that** the second useful data transmission capacity corresponds to the capacity of a "DECT full-slot" channel and the second useful data transmission capacity corresponds to the capacity of a "DECT double-slot" channel.

5. Method according to one of Claims 1 to 3, **characterized in that** the second telecommunications subsystem (DIIS, RW-TTS) is based on a GSM system and the prescribed number of second telecommunications channels are GSM channels.

6. Method according to one of Claims 1 to 3, **characterized in that** the second telecommunications subsystem (DIIS, RW-TTS) is based on a PHS system, a WACS system or a PACS system, and the prescribed number of second telecommunications channels are PHS, WACS or PACS channels.

7. Method according to one of Claims 1 to 3, **characterized in that** the second telecommunications subsystem (DIIS, RW-TTS) is based on an "IS-54" system or a PDC system, and the prescribed number of second telecommunications channels are "IS-54'' or PDC channels.

8. Method according to one of Claims 1 to 3, **characterized in that** the second telecommunications subsystem (DIIS, RW-TTS) is based on a CDMA system, a TDMA system, an FDMA system or a system which is hybrid in terms of these aforesaid transmission standards, and the prescribed number of second telecommunications channels are CDMA, TDMA, FDMA channels or channels which are hybrid in terms of these aforesaid transmission standards.

9. Method according to Claim 4, **characterized in that** the first telecommunications interface (DIFS) is a DECT INTERMEDIATE FIXED SYSTEM (DIFS) and the second telecommunications interface (DIPS) is a DECT INTERMEDIATE PORTABLE SYSTEM (DIPS).

10. Method according to one of Claims 1 to 9, **characterized in that** the useful data transmission protocol is the LU1 data service expanded by the Reed Solomon Code.

11. Method according to Claim 10, **characterized in that** the Reed Solomon Code is the systematically truncated Reed Solomon Code of the LU7 data service.

12. Method according to one of Claims 1 to 9, **characterized in that** the useful data transmission protocol is the LU1 data service expanded by the convolution code with the convolution rate "4/5".

## Revendications

1. Procédé pour la transmission de données utilisateur dans un système de télécommunication hybride, en particulier un système "RLL/WLL spécifique ISDN<->DECT",
a) dans lequel le système de télécommunication hybride contient, pour la transmission des données utilisateur,
a1) un premier système partiel de télécommunication (I-TTS) avec au moins un premier canal de télécommunication qui présente chaque fois une première capacité de transmission de données utilisateur, et
a2) un deuxième système partiel de télécommunication (DIIS, RW-TTS) avec un nombre prédéterminé de deuxièmes canaux de télécommunication présentant chacun une deuxième capacité de transmission de données utilisateur,
b) le deuxième système partiel de télécommunication (DIIS, RW-TTS) servant à la transmission des données présente une première interface de télécommunication (DIFS) et une deuxième interface de télécommunication (DIPS) qui sont reliées l'une à l'autre par l'intermédiaire du deuxième canal de télécommunication resp. des deuxièmes canaux de télécommunication,
c) le deuxième système partiel de télécommunication (DIIS, RW-TTS) est raccordé au premier système partiel de télécommunication (I-TTS) comme boucle locale de transmission d'informations, par l'intermédiaire des deux interfaces de télécommunication (DIFS, DIPS),
d) la première capacité de transmission des données est inférieure à une troisième capacité de transmission de données qui découle du nombre prédéterminé de deuxièmes canaux de télécommunication présentant chacun la deuxième capacité de transmission de données utilisateur,
**caractérisé en ce que**
les données utilisateur sont transmises selon un protocole de transmission de données utilisateur dans lequel une redondance de transmission de données qui découle de la différence entre la première capacité de transmission de données utilisateur et la troisième capacité de transmission de données utilisateur est utilisée au moins en partie pour évite des retards de transmission apparaissant en plus des retards de transmission provoqués par le système dans le cas d'une transmission de données utilisateur complètement protégée, au prix d'une transmission de données utilisateur exempte d'erreurs.

2. Procédé selon la revendication 1, **caractérisé en ce que** la redondance de transmission de données est utilisée partiellement.

3. Procédé selon la revendication 1 ou 2, **caractérisé en ce que** le premier système partiel de télécommunications (I-TTS) est un système ISDN et le premier canal de télécommunication resp, les premiers canaux de télécommunication sont un canal ISDN-B resp. des canaux ISDN-B, et **en ce que** la première capacité de transmission de données utilisateur correspond à la capacité d'un canal "ISDN-B".

4. Procédé selon l'une des revendications 1 à 3, **caractérisé en ce que** le deuxième système partiel de télécommunications (DIIS, RW-TTS) est basé sur un système DECT, et le nombre prédéterminé de deuxièmes canaux de télécommunication sont des canaux DECT, et **en ce que** la deuxième capacité de transmission de données utilisateur correspond à la capacité d'un canal "DECT-Full-Slot", la deuxième capacité de transmission de données utilisateur correspondant à la capacité d'un canal "DECT-Double-Slot".

5. Procédé selon l'une des revendications 1 à 3, **caractérisé en ce que** le deuxième système partiel de télécommunications (DIIS, RW-TTS) est basé sur un système GSM, et le nombre prédéterminé de deuxièmes canaux de télécommunication sont des canaux GSM.

6. Procédé selon l'une des revendications 1 à 3, **caractérisé en ce que** le deuxième système partiel de télécommunications (DIIS, RW-TTS) est basé sur un système PHS-System, un système WACS ou un système PACS, et le nombre prédéterminé de deuxièmes canaux de télécommunication sont respectivement des canaux PHS, WACS ou PACS.

7. Procédé selon l'une des revendications 1 à 3, **caractérisé en ce que** le deuxième système partiel de télécommunications (DIIS, RW-TTS) est basé sur un système "IS-54" ou un système PDC, et le nombre prédéterminé de deuxièmes canaux de télécommunication sont respectivement des canaux "IS-54" ou PDC.

8. Procédé selon l'une des revendications 1 à 3, **caractérisé en ce que** le deuxième système partiel de télécommunications (DIIS, RW-TTS) est basé sur un système CDMA, sur un système TDMA, sur un système FDMA ou sur un système hybride en termes desdites normes de transmission ci-dessus, et le nombre prédéterminé de deuxièmes canaux de télécommunication sont respectivement des canaux CDMA, TDMA ou FDMA, ou des canaux hybrides en termes desdites normes de transmission.

9. Procédé selon la revendication 4, **caractérisé en ce que** la première interface des télécommunications (DIFS) est un DECT INTERMEDIATE FIXED SYSTEM (DIFS), et la deuxième interface de télécommunication (DIPS) un "DSET INTERMEDIATE PORTABLE SYSTEM" (DIPS).

10. Procédé selon l'une des revendications 1 à 9, **caractérisé en ce que** le protocole de transmission de données utilisateur est le service de données LU1 élargi au code Reed-Solomon.

11. Procédé selon la revendication 10, **caractérisé en ce que** le code Reed-Solomon est le code Reed-Solomon raccourci systématiquement du service de données LU7.

12. Procédé selon l'une des revendications 1 à 9, **caractérisé en ce que** le protocole de transmission de données utilisateur est le service des données LU1 élargi au code de convolution au taux de convolution de "4/5".
